Europäisches Patentamt

European Patent Office

Office européen des brevets

(11) Publication number: 0 427 030 A2

# EUROPEAN PATENT APPLICATION

(21) Application number: 90120112.9

(22) Date of filing: 19.10.90

(51) Int. Cl.5: F16B 31/04

(30) Priority: 07.11.89 IT 6795989

(43) Date of publication of application:
15.05.91 Bulletin 91/20

(84) Designated Contracting States:
DE ES FR GB SE

(71) Applicant: FIAT AUTO S.p.A.
Corso Giovanni Agnelli 200
I-10135 Torino(IT)

(72) Inventor: Ricordi, Eppo Alessandro
Corso Antony 31
I-10093 Collegno(IT)
Inventor: Cappelleto, Paolo
Via Goffredo Casalis 8
I-10100 Torino(IT)

(74) Representative: Jorio, Paolo et al
STUDIO TORTA Società Semplice Via Viotti 9
I-10121 Torino(IT)

(54) Device for distributing fastening loads over adjacent mechanical parts.

(57) A device for connecting at least two parts (8, 9) consisting of two separately formed flanges. Each flange presents a partially cylindrical seat (13, 14) housing a stud (5) and a flat fastening surface (21, 22) perpendicular to the stud seat. For distributing the load of the nut (7) evenly over the flanges, two washers (23, 34) are employed, one of which (23) presents, on one side (25), two arched surfaces (26, 27) contacting the two flanges, and, on the other side (31), a spherical surface (32) engaging a mating surface (33) on the other washer (34), which also presents a flat surface (37) perpendicular at all times to the stud axis.

Fig.1

## DEVICE FOR DISTRIBUTING FASTENING LOADS OVER ADJACENT MECHANICAL PARTS

The present invention relates to a device for distributing the fastening load of a stud and nut or a screw over at least two adjacent mechanical parts, each part having a partially cylindrical seat housing the screw or stud and a flat fastening surface perpendicular to the seat axis.

A frequent problem encountered in mechanical constructions, particularly the construction of vehicles and internal combustion engines, is that of fastening at least two flanges, e.g. against a seal, using a single screw or a stud and nut. As the two flanges are formed separately, differences in thickness arise, which result in a difference in height of the screw head or nut mating surfaces.

When a flat washer is used between said surfaces and the nut, the washer tilts to adapt to the difference in height between the flat surfaces, so that the nut acts on only part of the washer which therefore fails to ensure adequate support for the nut or flange surfaces.

As a result, the fastening load of the nut is distributed unevenly over the flanges and the seal, thus impairing sealing efficiency and resulting in possible workout of the stud and nut.

The aim of the present invention is to provide a fastener ensuring even load distribution over the flanges, and designed to eliminate the drawbacks typically associated with known fasteners.

With this aim in view, according to the present invention, there is provided a fastening load distribution device, wherein each mechanical part for connection presents a flat fastening surface perpendicular to the stud seat axis, and wherein said device comprises supporting means between said flat surfaces, and a fastening member; characterised by the fact that said supporting means comprise a first washer having, on one side, at least two arched convex surfaces, each designed to rest on one of said flat surfaces so as to adapt said first washer to the difference in height between said flat surfaces.

A preferred non-limiting embodiment of the present invention will be described by way of example with reference to the accompanying drawings, in which:

Fig.1 shows a cross section of a stud and nut fastening device in accordance with the present invention;

Fig.2 shows a smaller-scale section of two mechanical parts in the connecting position and upside down as compared with Fig.1;

Fig.3 shows a smaller-scale exploded view in perspective of two details on the Fig.1 device, also illustrated upside down as compared with Fig.1.

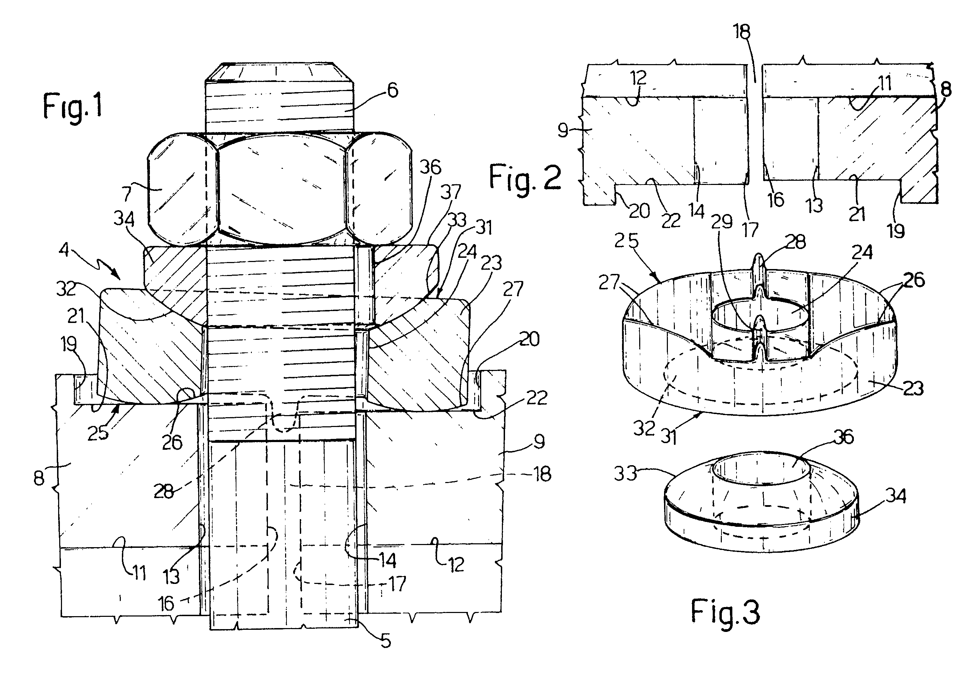

Number 4 in Fig.1 indicates a fastening device comprising a bolt or stud 5 (shown only partially) having a threaded end 6 engaging a fastening member consisting of a threaded nut 7. Fastening device 4 provides for fastening two adjacent mechanical parts 8 and 9 (Fig.2) consisting of the flanges of two separate parts, to be fastened by respective perfectly flat surfaces 11 and 12 against a seal (not shown). Flanges 8 and 9 present respective partially cylindrical seats 13 and 14, i.e. surfaces having a section in the form of an arc of a circle, for loosely housing stud 5 (Fig.1), the axis of which seats 13 and 14 therefore substantially coincides with that of stud 5. Flanges 8 and 9 also present respective surfaces 16 and 17 (Fig.2) parallel to the axes of respective seats 13 and 14 and arranged facing each other with a gap 18 in between.

Finally, flanges 8 and 9 present respective semicircular recesses 19 and 20 having respective flat fastening surfaces 21 and 22 and housing supporting means placed between surfaces 21 and 22 and nut 7.

As flanges 8 and 9 are formed together with their respective parts, and therefore independently of each other, the height or thickness of flanges 8 and 9 cannot be strictly identical. Consequently, when surfaces 11 and 12 are placed, via a seal, on a single flat surface, surfaces 21 and 22 present a difference in height as emphasized in Fig.s 1 and 2.

According to the present invention, said supporting means comprise a first washer 23 (Fig. 3) having a central hole 24, the diameter if which is such as to enable a certain amount of transverse and angular adjustment in relation to stud 5 (Fig. 1). On side 25 facing recesses 19 and 20, washer 23 presents two projections having respective arched convex surfaces 26 and 27 designed to rest on respective flat surfaces 21 and 22 of respective flanges 8 and 9. In the example shown of two flanges 8 and 9 for connection, arched surfaces 26 and 27 (Fig.3) consist of cylindrical portions having two parallel axes symmetrical in relation to the center of washer 23. This also presents two diametrical projections or teeth 28 and 29 parallel to the axes of surfaces 26 and 27 and therefore in line with each other. Said teeth 28 and 29 are designed to fit inside gap 18 (Fig.1) for pre-positioning washer 23 inside recesses 19 and 20.

On the other side 31, washer 23 presents a spherical concave surface 32 concentric with hole 24 (Fig. 1) and engaged by a convex mating surface 33 having the same curve radius as surface 32. Surface 33 is formed on a second washer 34 having a central hole 36 of substantially the same diameter as hole 24, and a flat surface 37 engaged by nut 7.

For fastening flanges 8 and 9, these are first arranged with seats 13 and 14 facing each other, so as to form gap 18 between surfaces 16 and 17. Stud 5 is then inserted inside seats 13 and 14; and washer 23 is assembled by inserting stud 5 inside hole 24, and adjusted so as to insert teeth 28 and 29 inside gap 18. Washer 34 is then fitted on to washer 23, with surface 33 contacting surface 32; and nut 7 is fitted on to stud 5 and torqued. When nut 7 engages surface 37 of washer 34, surface 37 is positioned perpendicular to the axis of stud 5, thus enabling spherical surface 33 to slide over surface 32, regardless of whether the axis of washer 23 is inclined in relation to that of stud 5, due to the difference in height of surfaces 21 and 22.

Cylindrical surfaces 26 and 27 in turn enable washer 23 to adjust to said difference in height, by presenting a generating line permanently contacting flat surfaces 21 and 22. The fastening load of nut 7 is therefore distributed evenly over flanges 8 and 9 within the tilting capacity of washer 23. By virtue of washers 23 and 34, flanges 8 and 9 are therefore so tightened as to eliminate any impairment in sealing efficiency, and any possibly of nut 7 working loose as a result of the difference in flatness as compared with the washer. To those skilled in the art, it will be clear that changes and improvements may be made to the fastening device described and illustrated herein without, however, departing from the scope of the present invention. For example, stud 5 and nut 7 may be replaced by a hexagonal-head or any other type of screw; the fastening device itself may be used for fastening more than two flanges, in which case, teeth 28 and 29 will be arranged at 120°, 90°, etc., and the projections on washer 23 will present spherical as opposed to cylindrical arched surfaces; spherical surface 33 may be formed on nut 7 itself; and surfaces 26 and 27 may present other than a cylindrical or spherical arched section.

## Claims

1) - A device for distributing fastening loads over at least two adjacent mechanical parts (8, 9) connected by means of a stud (5) and respective fastening member (7); each said part (8, 9) presenting a partially cylindrical seat (13, 14) housing said stud (5), and a flat fastening surface (21, 22) perpendicular to the axis of said seat (13, 14); said device comprising supporting means (23, 34) located between said flat surfaces (21, 22) and said fastening member (7), and being characterised by the fact that said supporting means comprise a first washer (23) having, on one side (25), at least two arched convex surfaces (26, 27), each designed to rest on one of said flat surfaces (21, 22) so as to adapt said first washer (23) to the difference in height between said flat surfaces (21, 22).

2) - A device as claimed in Claim 1, wherein said parts (8, 9) are two in number, characterised by the fact that said ached surfaces (26, 27) are cylindrical with two parallel axes symmetrical in relation to the center of said first washer (23).

3) - A device as claimed in Claim 2, characterised by the fact that said parts (8, 9) are so positioned in relation to each other as to define a diametrical gap (18) in relation to said seats (13, 14); said first washer (23) presenting two diametrical projections (28, 29) parallel to the axes of said partially cylindrical surfaces (26, 27) and designed to fit inside said gap (18).

4) - A device as claimed in Claim 3, characterised by the fact that said first washer (23) presents a concentric, spherical surface (32) designed to engage a mating surface (33) secured to said fastening member (7).

5) - A device as claimed in Claim 4, characterised by the fact that said maling surfdce (33) is formed on one side of a second washer (34) having, on the other side, a flat surface (37) engaged by said fastening member (7).

6) - A device as claimed in Claim 5, characterised by the fact that said washers (23, 34) both present a central hole (24, 36) of such as diameter as to enable adaption to said difference in height.

7) - A device as claimed in Claim 5 or 6, characterised by the fact that said spherical surface (32) of said first washer (23) is concave, and said mating surface (33) of said second washer (34) is convex.

8) - A device as claimed in one of the foregoing Claims, characterised by the fact that said fastening member consists of a threaded nut (7).

9) - A device as claimed in one of the foregoing Claims from 1 to 7, characterised by the fact that said fastening member consists of a screw head.

Fig.1

7

34

4

32

21

19

25

8

26

28

11

13

16

5

6

36

37

33 31

24

23

27

20

22

9

18

14

12

17

Fig.2

18

12

11

8

9

16

13

21

20

22

14

17

19

Fig.3

25

27

29

28

24

26

32 31

23

33

36

34

EP 0 427 030 A2